# EUROPEAN PATENT SPECIFICATION

(11) **EP 3 761 611 B1**
(45) Date of publication and mention of the grant of the patent: **25.05.2022**
(21) Application number: 20184364.6
(22) Date of filing: 07.08.2017
(51) Int. Cl.: H04L 29/08

(54) **MANAGEMENT OF MULTIPLE CLUSTERS OF DISTRIBUTED FILE SYSTEMS**
VERWALTUNG MEHRERER CLUSTER AUS VERTEILTEN DATEISYSTEMEN
GESTION DE MULTIPLES GRAPPES DE SYSTÈMES DE FICHIERS DISTRIBUÉS

(30) Priority: 16.11.2016 US 201662422751 P; 03.05.2017 US 201715585815
(43) Date of publication of application: 06.01.2021
(62) Divisional of application: 17791535.2
(73) Proprietor: Huawei Cloud Computing Technologies Co., Ltd., Guizhou 550025 (CN)
(72) Inventor: GUO, Lei, Markham, Ontario L6E 1M5 (CA); CHEN, Jin, Thornhill, Ontario L4J 5C1 (CA); CHEN, Chong, Richmond Hill, Ontario L4E 5E3 (CA); KE, Xiaodi, Markham, Ontario L6E 0G9 (CA); CHEN, Chen, Markham, Ontario L3P 7X2 (CA)
(74) Representative: Kreuz, Georg Maria

(56) References cited:
- US-A1- 2010 161 585
- US-A1- 2013 227 558
- US-A1- 2016 253 340

## Description

### TECHNICAL FIELD

The present disclosure relates to managing multiple clusters of distributed file systems in a centralized manner.

### BACKGROUND OF THE ART

A cluster of distributed file systems is a client/server based application that allows users (via clients) to access and process data from multiple hosts sharing via a computer network.

As file systems increase in size and different needs arise across an organization, multiple clusters of distributed file systems end up being created and managed independently from one another. This creates certain challenges, such as those associated with having data generated in one cluster that is needed in a different cluster, application load balancing across multiple clusters, and data replication needs for disaster recovery purposes.

Certain tools exist to address these issues, but they are complex and are directed to individual needs, such as data replication or synchronizing name spaces. There is therefore a need for a holistic approach to managing multiple clusters of distributed file systems.

Document US 2010/0161585 A1 discloses a data processing method in an asymmetric cluster filesystem.

### SUMMARY

The present disclosure is drawn to methods and systems for managing clusters of distributed file systems having cluster files stored thereon. The invention is defined by the appended claims.

### BRIEF DESCRIPTION OF THE DRAWINGS

Further features and advantages of the present invention will become apparent from the following detailed description, taken in combination with the appended drawings, in which:
Figure 1 is a block diagram of an example computing environment;
Figure 2 is a block diagram of an example cluster management system;
Figure 3 is a flowchart illustrating an example embodiment for a File Creation request;
Figure 4 is a flowchart illustrating an example embodiment for a File Open request;
Figure 5 is a block diagram of an example cluster management system with multiple client components;
Figure 6 is a block diagram of an example cluster management system with multiple manager components;
Figure 7 is a block diagram of an example cluster management system with multiple sub-units connected together;
Figure 8 is a block diagram of an example computing environment with multiple sub-units in the cluster management system;
Figure 9A is a block diagram of an example computing device for implementing the cluster management system;
Figure 9B is a block diagram of an example virtual machine implemented by the computing device of Figure 9B;
Figure 10A illustrate various scenarios for file creation;
Figure 10B illustrates various scenarios for file access;
Figure 10C illustrates various scenarios for file replication;
Figure 11A illustrates an example of the cluster management system operating in a first mode; and
Figure 11B illustrates an example of the cluster management system operating in a second mode.

It will be noted that throughout the appended drawings, like features are identified by like reference numerals.

### DETAILED DESCRIPTION

In accordance with the present embodiments, an intermediate layer is provided between applications on user devices and clusters of one or more distributed file systems. The intermediate layer is referred to herein as a cluster management system. It receives requests for files stored in the distributed file systems from the applications on the user devices. The cluster management system creates cluster management files, which are logical files stored at the intermediate layer, to manage cluster files, which are the physical files stored in the distributed file systems. Metadata is stored in the cluster management files in order to map the logical files to the physical files. The metadata thus comprises the mapping information as well as other information, such as the name and location of the physical files in the distributed file systems.

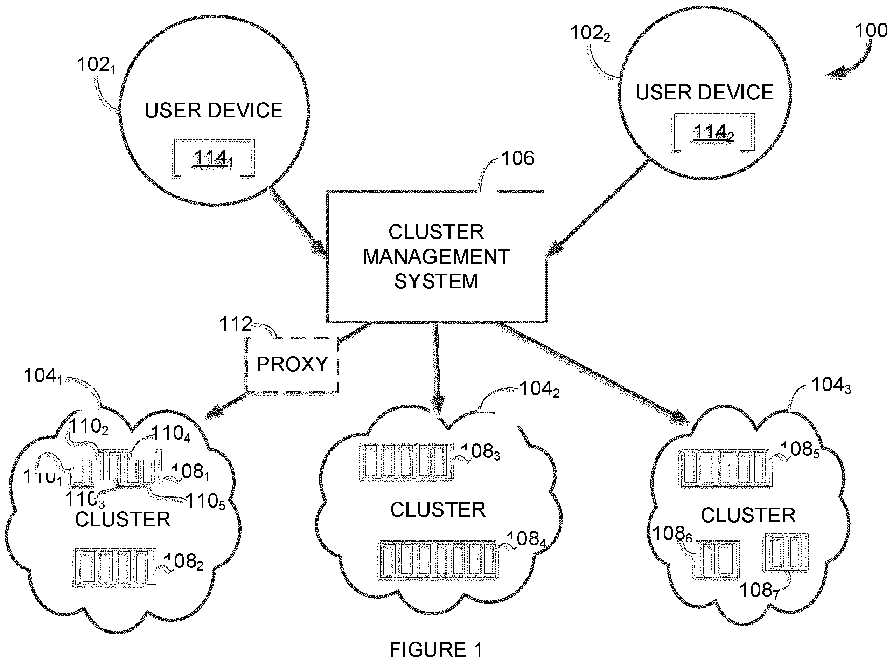

Referring to Figure 1, there is illustrated a computing environment 100. At least one user device 102₁, 102₂ (collectively referred to as user devices 102) has at least one application 114₁, 114₂ (collectively referred to as applications 114) running thereon. The computing environment 100 comprises a plurality of clusters 104₁, 104₂, 104₃ (collectively referred to as clusters 104). Each one of the clusters 104 comprises one or more distributed file systems 108₁, 108₂, 108₃, 108₄, 108₅, 108₆, 108₇ (collectively referred to as DFS 108). Each one of the DFS 108 stores one or more files 110₁, 110₂, 110₃, 110₄, 110₅ (collectively referred to as cluster files 110), accessible by applications 114 on user devices 102. The cluster files 110 correspond to data and/or directories stored in various formats on the DFS 108, and may be accessed and processed by the applications 114 as if they were on the user devices 102. The cluster files 110 may also be referred to as physical files, as they are created in the real underlying file systems of the clusters 104.

In some embodiments, the DFS 108 are Hadoop Distributed File Systems (HDFS) and/or Hadoop Compatible File Systems (HCFS), such as Amazon S3, Azure Blob Storage, Google Cloud Storage Connector, and the like. Each one of the clusters 104 can comprise a single type of DFS 108, such as HDFS, or one or more types of distributed file systems 108 that are compatible, such as one HDFS and two HCFS. Other types of distributed file systems 108 may also be used.

The DFS 108 of a given cluster, such as cluster 104₁, are in a same or different location. For example, DFS 108₁ is located on the premises of an organization and DFS 108₂ is located in the cloud. In another example, DFS 108₁ is located at a first branch of an organization and DFS 108₂ is located at a second branch of the same organization, the first and second branches being in different geographical locations, such as different cities, different countries, different continents, and the like. In yet another example, DFS 108₁ and DFS 108₂ are both located in a same geographical location but correspond to different departments or are located on different floors of the organization. Clusters 104 may also be provided in same or different locations. For example cluster 104₁ is in multiple cities in China, cluster 104₂ is spread across Europe, and cluster 104₃ is in Miami, Florida.

A cluster management system 106 is provided as an intermediate layer between the clusters 104 and the user devices 102. The cluster management system 106 is an entity that manages and coordinates operation of the clusters 104. The cluster management system 106 interfaces with the applications 104 from the user devices 102 to receive requests regarding the cluster files 110. The requests regarding the cluster files 110 may including various operation on the cluster files 110, such as creating a cluster file, modifying a cluster file, accessing a cluster file, and displacing a cluster file, etc. The cluster management system 106 generates or updates respectively and then stores the generated or updated metadata for the cluster files 110 when a received request requires a file to be created or modified, such as a request to create a file, a request to change a file name, a request to displace a file, and the like. The file will ultimately be created in one of the clusters 104, and more specifically in a DCS 108 as a cluster file 110. Metadata about the cluster file includes file name and its location in the clusters 104. When a received request requires access to a file without modification thereto, the cluster management system 106 uses the metadata about the cluster file to locate the file and provide access accordingly.

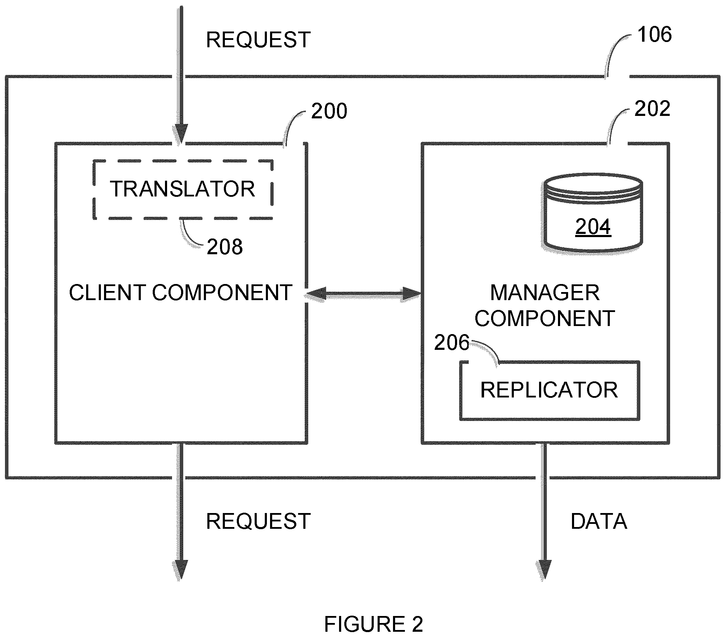

Figure 2 illustrates an example embodiment of the cluster management system 106. As an example embodiment, the cluster management system 106 includes a client component 200 and a manager component 202 cooperating to manage the clusters 104 in a global namespace. The cluster files thus exist in multiple physical locations in the clusters 104 but are managed under a unified structure of the global namespace. Requests regarding the cluster files 110 are received by the client component 200 from the applications 114. The client component 200 sends instructions regarding the request to the manager component 202.

When the request concerns the creation or the update of a file, the manager component 202 creates and/or updates metadata for the cluster files 110 based on the requests.

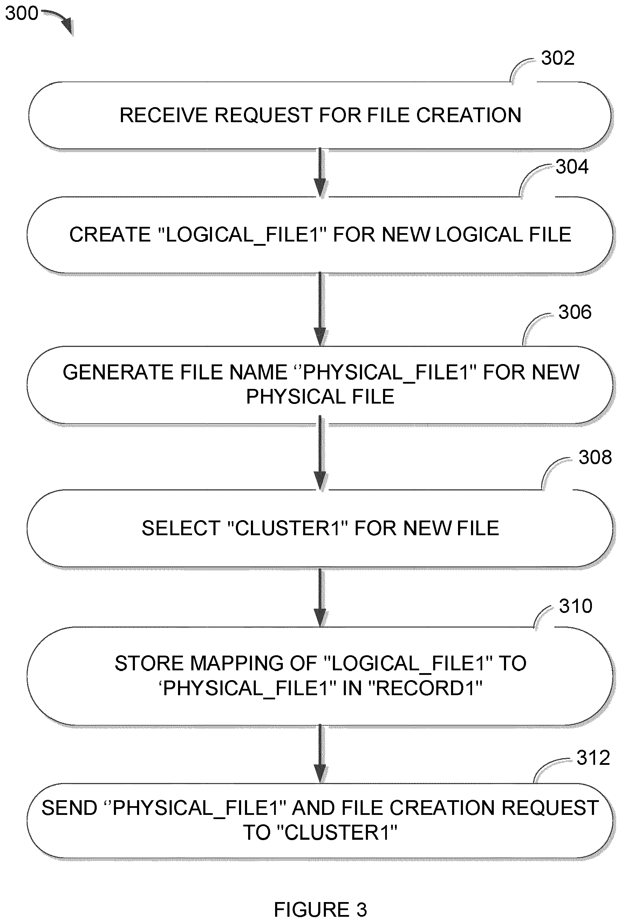

Figure 3 illustrates an example embodiment for creation of a new cluster file 110 in accordance with a method 300. At step 302, a request to create a new file is received. The request is received from any one of the applications 114 on any one of the user devices 102 by the client component 200 of the cluster management system 106. In some embodiments, the only information provided in the file creation request is the request itself, i.e. a command line to create a file. In some embodiments, the request also comprises a file name and/or a file destination. The file destination refers to a given location in any of the clusters 104, or in any of the DFS 108 in a given one of the clusters 104. If the new file has any relation with an existing file already present in any one of the clusters 104, this information may also be provided in the request.

At step 304, a cluster management file is created for the new cluster file. The cluster management file may also be referred to as a logical file that is created and managed in the global file namespace. Each logical file may have one or more corresponding physical file (i.e. cluster files 110). In this example, the file name for the cluster management file is "LOGICAL_FILE1".

At step 306, a file name for the physical file is generated. In this example, the file name for the physical file is called "PHYSICAL_FILE1". The filename of the physical file is metadata regarding the new file to be created.

At step 308, a location for the physical file "PHYSICAL_FILE1" is selected among the various clusters 104 managed by the cluster management system 106. When the location is not part of the information provided with the request, the location may be selected as a function of various factors, as will be explained in more detail below. The location for the physical file also forms part of the metadata about the cluster file.

The cluster management system 106 speaks with the applications 114 using the logical file names, i.e. "LOGICAL_FILE1" in this case. For example, a request to open this file, received from the applications 114 will take the form of "open LOGICAL_FILE1". The cluster management system 106 speaks with the clusters 104 using the physical file names, i.e. "PHYSICAL_FILE1" in this case. For example, the request to open "LOGICAL_FILE1", sent to the appropriate one of the clusters 104, will take the form of "open PHYSICAL FILE1". The cluster management system 106 therefore stores a mapping of "LOGICAL_FILE1" to "PHYSICAL_FILE1" in "RECORD1", as per step 310. This mapping includes the metadata previously generated by the manager component 202 in response to the request to create a new file, and is stored in the cluster management file. The metadata therefore includes the name of the physical file and its location in the clusters 104.

At step 312, the file creation request is transmitted to the appropriate cluster, namely "CLUSTER1" with the physical file name "PHYSICAL_FILE1". The cluster will then create a cluster file 110 accordingly.

Using the example architecture of Figure 2 for the cluster management system 106, the request is received from the application by the client component 200, the metadata is generated and stored by the manager component 202 in the cluster management file, and the request is sent to the appropriate cluster by the client component 200. Other architectures for the cluster management system 106 may also be used to implement the method 300.

The metadata is stored in the cluster management files in one or more storage devices, such as storage device 204, which may be local or remote to the cluster management system 106.

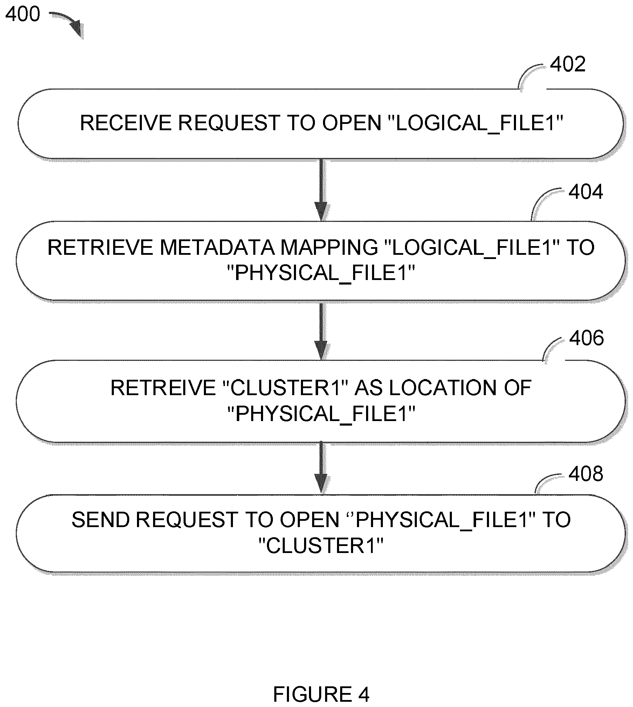

Figure 4 is a method 400 illustrating an example embodiment for processing a request to open a file that has already been created. The applications 114 are aware of the existence of the logical files, not the physical files. Therefore, any request to open a file received from the applications 114 will include the name of the logical file, as per step 402. The request is received from any one of the applications 114 on any one of the user devices 102 by the client component 200 of the cluster management system 106. The request includes the name of the file to be opened, namely "LOGICAL_FILE1", and is sent to the manager component 202 from the client component 200.

At step 404, the manager component 202 retrieves the metadata that maps "LOGICAL_FILE1" to "PHYSICAL_FILE1" in order to determine the location of "PHYSICAL_FILE1" in the clusters 104 at step 406. The metadata is stored in the cluster management file, in storage device 204. At step 408, the request to open the physical file is sent to the appropriate cluster. The request may take the form of "open PHYSICAL_FILE1" and be sent to "CLUSTER1".

In some embodiments, the client component 200 sends the request to open "LOGICAL_FILE1" to the manager component 202. The manager component 202 retrieves the mapping of "LOGICAL_FILE1" to "PHYSICAL_FILE1" from "RECORD1" and retrieves "CLUSTER1" as the location of "PHYSICAL_FILE1". The manager component 202 then returns "CLUSTER1" to the client component 200 and the client component 200 sends the request to open "PHYSICAL_FILE1" to "CLUSTER1".

Referring back to Figure 2, a replicator 206 is provided in the manager component 202 in order to share information between clusters 104 and to ensure consistency across the clusters 104. The replicator 206 may replicate data from one cluster, such as cluster 104₁, to another cluster, such as cluster 104₂, when needed. This allows, for example, DFS 108₄ to locally store data previously only available in DFS 108₂, which allows cluster 104₂ to perform operations that could previously only be performed by cluster 104₁. This can be used, for example, for the purposes of load balancing across clusters 104 or for a join operation using data from both cluster 104₁ and cluster 104₂. In some embodiments, data replication is performed selectively, or as needed, based on the requests received from the applications 114. In some embodiments, data replication is performed according to a defined schedule, to ensure that data is always available across all clusters 104. In some embodiments, data replication is performed selectively and periodically. The replication of data is transparent to the applications 114 and to the user devices 102.

Load balancing is used by the data management system 106 to improve distribution of workload across the clusters 104. Load balancing aims to optimize resource use, maximize throughput, minimize response time, and avoid overload of any single resource. In some embodiments, the cluster management system 106, for example the manager component 202, is configured to optimize the performance of the clusters 104 by selecting a cluster among the clusters 104 to perform a given task as a function of a received request. Tasks can therefore be spread across the clusters 104 more evenly, and/or concentrated with specific ones of the clusters 104 for various reasons. Some of the selection criteria used to select a cluster when a new request is received are the availability of data in a given cluster, capacity, speed, availability of the cluster, and the type of request. Because data may be replicated from one cluster to another, availability of the data in a given cluster is only one criteria that is weighed against the other criteria for an optimized performance of the computing environment 100.

In some embodiments, the cluster management system 106, for example the client component 200, comprises a translator 208. The translator 208 is used to receive requests from an application based on a DFS type that differs from one or more of the DFS types found in the clusters 104. For example, if application 114₁ is HCFS based, and the cluster management system 106 elects to send the request to cluster 104₃ where the DFS 108₅, 108₆, 108₇ are HDFS, then the translator 208 will translate the request from HCFS to HDFS. The request received from application 114₁ is in an HCFS format and the request transmitted to cluster 104₃ by the cluster management system 106 is in an HDFS format. The translator 208 can be configured to perform translations other than HDFS-HCFS and HCFS-HDFS.

As illustrated in Figure 1, there may be a proxy 112 provided between any one of the clusters 104 and the cluster management system 106. In some embodiments, the proxy 112 is embedded inside the cluster management system 106. In other embodiments, the proxy 112 is provided externally to the cluster management system 106. The proxy is used to provide the applications 114 access to the clusters 104. Although only one proxy 112 is illustrated, one or more proxies 112 may also be present in the computing environment 100.

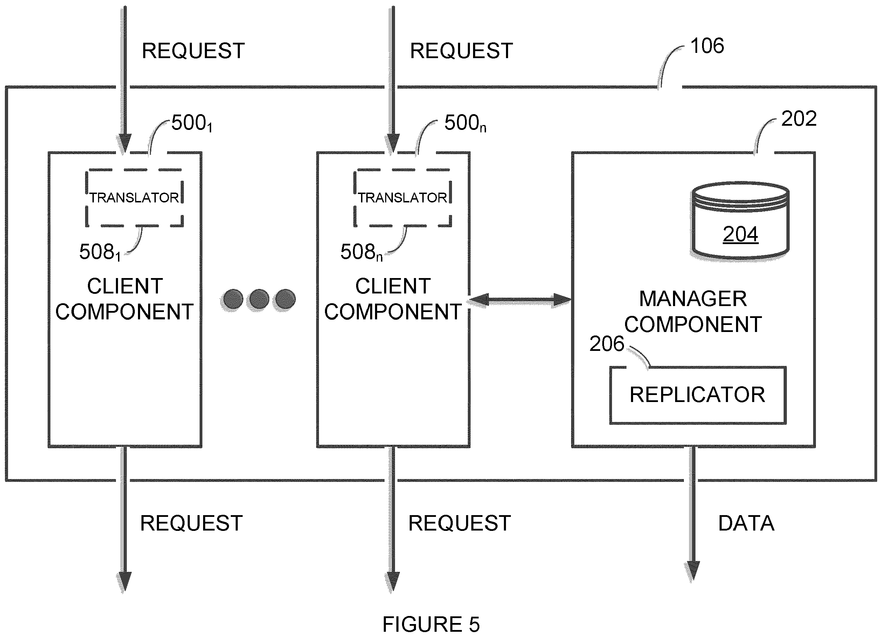

As per Figure 5, in some embodiments, the cluster management system 106 comprises a plurality of client components 500₁, ..., 500ₙ. Each one of the client components 500₁, ..., 500ₙ is operatively connected to the manager component 202 and is configured to interface with one or more applications 114 for the user devices 102. In some embodiments, the cluster management system 106 comprises one client component 500ₙ per application 114 from which a request can be received. Each client component 500ₙ comprises a translator 308₁, ..., 308ₙ for translating requests from a first format to a second format. Alternatively, one or more translators 208 are shared by the client components 500₁, ..., 500ₙ inside the cluster management system 106.

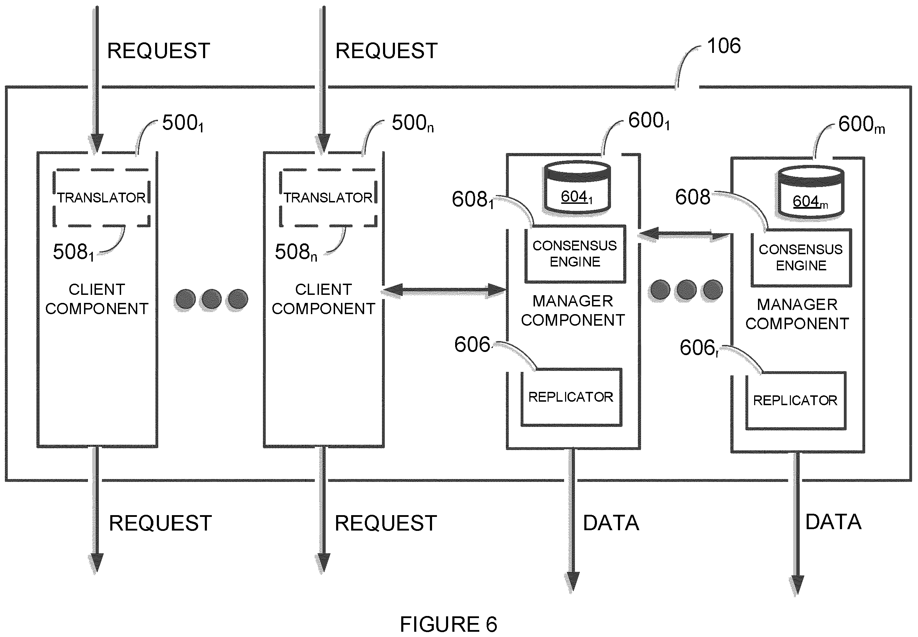

Figure 6 illustrates an embodiment comprising n client components 500₁, ..., 500ₙ and m manager components 600₁, ..., 600ₘ. The manager components 600₁, ..., 600ₘ each comprises a storage medium 604₁, ..., 604ₘ for storing metadata for a set of cluster files, and a replicator 606₁, ..., 606ₘ for replicating data across the clusters 104. Alternatively, one or more storage media 604ᵢ (where i = 1 to m) and/or one or more replicators 606ᵢ are shared by the manager components 600₁, ..., 600ₘ inside the cluster management system 106. The manager components 600₁, ..., 600ₘ are operatively connected together and can coordinate information exchanges and/or data operations via respective consensus engines 608₁, ..., 608ₘ.

The consensus engines 608₁, ..., 608ₘ are used to ensure agreement among the manager components 600₁, ..., 600ₘ on how to handle operations that involve clusters 104 managed by different manager components 600₁, ..., 600ₘ. Examples of operations requiring consensus are data replication, data sharing, and redistribution of loads among clusters 104. Consensus may also be used with other operations. In some embodiments, one or more consensus protocol is defined to coordinate operations on cluster files 110. Some examples of consensus protocols are Paxos, Chubby, Phase King, proof of work, Lockstep, MSR-type, and hashgraph. Other consensus protocols may be used.

In some embodiments, creating, updating, and/or deleting metadata from one or more cluster management file is performed via consensus protocol by the consensus engines. For example, application 114₁ sends out a request to delete cluster file 110s. The request is received by the client component 500₁ and transmitted to the manager component 600₁. Consensus engine 608₁ sends out a consensus request for the modification (i.e. to delete metadata related to cluster file 110₅) to consensus engines 608₂ to 608ₘ of manager components 600₂ to 600ₘ. Each consensus engine 608₂ to 608ₘ votes for the modification based on its current status independently of the other consensus engines. If a majority of consensus engines agree to the modification request, consensus engine 608₁ sends out a modification confirmation to consensus engine 608₂ to 608ₘ. Each manager component 600₁ to 600ₘ then applies the modification to its local cluster management file in its local storage device 604₁ to 604ₘ. If a majority of consensus engines disagree to the modification request, the modification is rejected and not applied by any of the manager components 600₁ to 600ₘ.

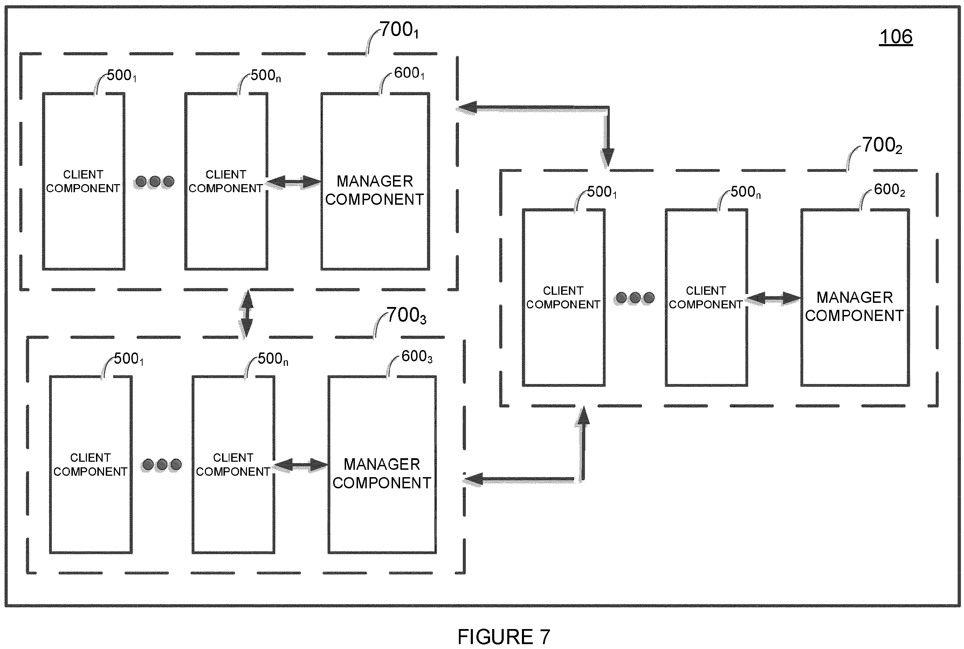

Each manager component 600₁, ..., 600ₘ is associated with one or more client components 500₁, ..., 500ₙ to form a sub-unit, and all of the sub-units are connected together to form the cluster management system 106. An example is illustrated in Figure 7 with three sub-units 700₁, 700₂, 700₃. For m=3, there are three manager components 600₁, 600₂, 600₃ and three sub-units 700₁, 700₂, 700₃ in the cluster management system 106. Each manager component 600₁, 600₂, 600₃ forms a sub-unit 700₁, 700₂, 700₃ with one or more client component 500₁, ..., 500ₙ.

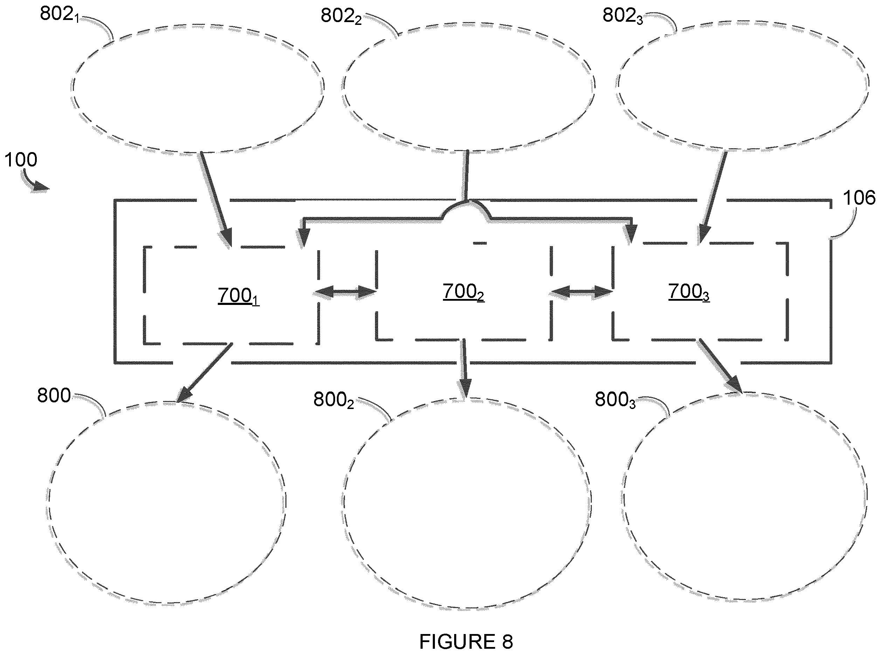

As illustrated in Figure 8, each sub-unit 700₁, 700₂, 700₃ interfaces with a separate set of clusters 800₁, 800₂, 800₃ and a separate set of user devices 802₁, 802₂, 802₃. In some embodiments, users devices 102 are shared among the sub units 700₁, 700₂, 700₃ and/or clusters 104 are shared among the sub-units 700₁, 700₂, 700₃.

Communication in the computing environment 100, across the sub-units 700₁, 700₂, 700₃, between the cluster management system 106 and the user devices 102, and/or between the cluster management system 106 and the clusters 104, occurs in various ways, including directly and indirectly over one or more networks. The networks can involve wired connections, wireless connections, or a combination thereof. The networks may involve different network communication technologies, standards and protocols, for example Global System for Mobile Communications (GSM), Code division multiple access (CDMA), wireless local loop, WiMAX, Wi-Fi, Bluetooth, Long Term Evolution (LTE) and so on. The networks may involve different physical media, for example coaxial cable, fiber optics, transceiver stations and so on. Example network types include the Internet, Ethernet, plain old telephone service (POTS) line, public switched telephone network (PSTN), integrated services digital network (ISDN), digital subscriber line (DSL), and others, including any combination of these. The networks can include a local area network and/or a wide area network.

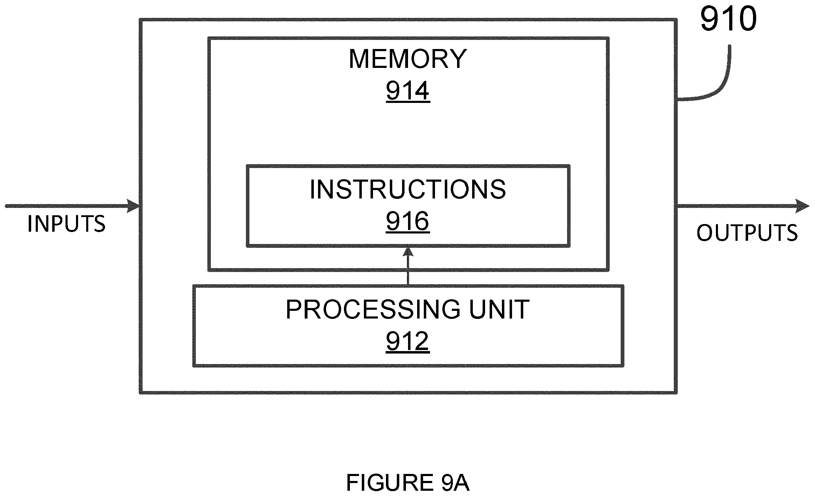

Figure 9A is an example embodiment of a computing device 910 for implementing the cluster management system 106. The computing device 910 comprises a processing unit 912 and a memory 914 which has stored therein computer-executable instructions 916. The processing unit 912 may comprise any suitable devices configured to cause a series of steps to be performed such that instructions 916, when executed by the computing device 910 or other programmable apparatus, may cause the functions/acts/steps specified in the methods described herein to be executed. The processing unit 912 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 914 may comprise any suitable known or other machine-readable storage medium. The memory 914 may comprise non-transitory computer readable storage medium, for example, but not limited to, an electronic, magnetic, optical, electromagnetic, infrared, or semiconductor system, apparatus, or device, or any suitable combination of the foregoing. The memory 914 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 914 may comprise any storage means (e.g., devices) suitable for retrievably storing machine-readable instructions 916 executable by processing unit 912.

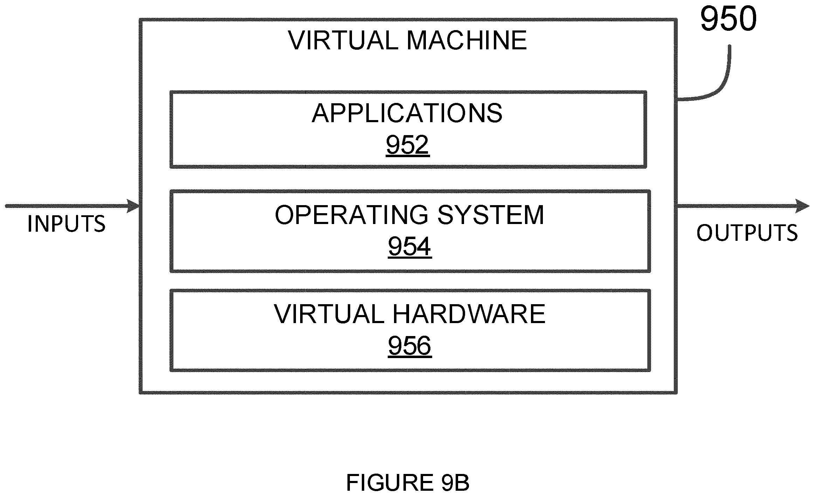

In some embodiments, the computing device 910 is a physical server on which one or more virtual machines is implemented, an example of which is shown in Figure 9B. The virtual machine 950 is an emulation of a computer system and comprises applications 952 that run on an operating system 954 using a set of virtual hardware 956. The virtual hardware 956 includes, for example, a CPU, memory, network interfaces, a disk, and the like. Each virtual machine 950 appears as a real machine from the outside world, and is self-contained and protected from other virtual machines on a same physical server. In some embodiments, the cluster management system 106 is implemented using one or more virtual machine 950.

Generating metadata for individual files and/or directories provides flexibility in responding to requests from applications 114. The request may be directed, by the cluster management system 106, to a given cluster where the original data is stored, or it may be redirected to another cluster, such as a cluster that is geographically closer to the user device 102 on which the application 114 sending out the request is running. Redirecting the request may improve system performance in wide area network (WAN) environments with large network latencies. Note that redirection of requests is available for certain types of requests, such as read operations, where the data is not modified. Requests involving modification of the data, such as write operations, are directed to the cluster with the original file.

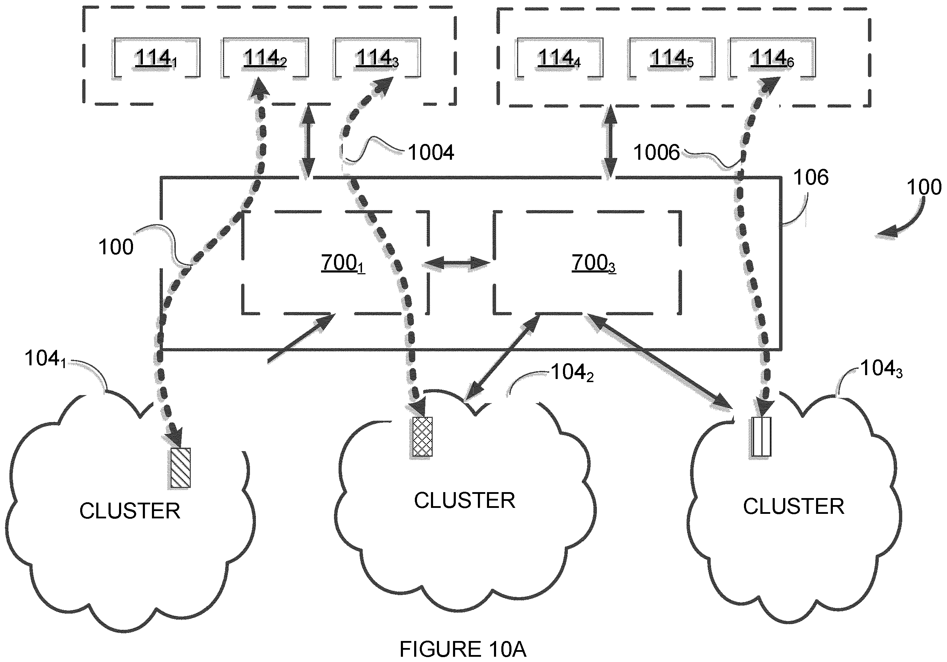

Indeed, the cluster management system 106 supports flexible policies that are configurable for creating, accessing, and replicating data across clusters. Figure 10A illustrates examples for various data creation scenarios. The cluster management system 106 may be configured to create a file on a nearest cluster in order to optimize performance. This example is illustrated by path 1002, where application 114₂ creates a file on cluster 104₁. The system 106 may be configured to create a file on a cluster with the most available space, for a more even distribution of data across the clusters. This example is illustrated by path 1004, where application 114₃ creates a file on cluster 104₂. The system 106 may be configured to create a file on a specified cluster, illustrated by path 1006 where application 114₆ creates a file on cluster 104₃. Other configurations and combinations may also be used.

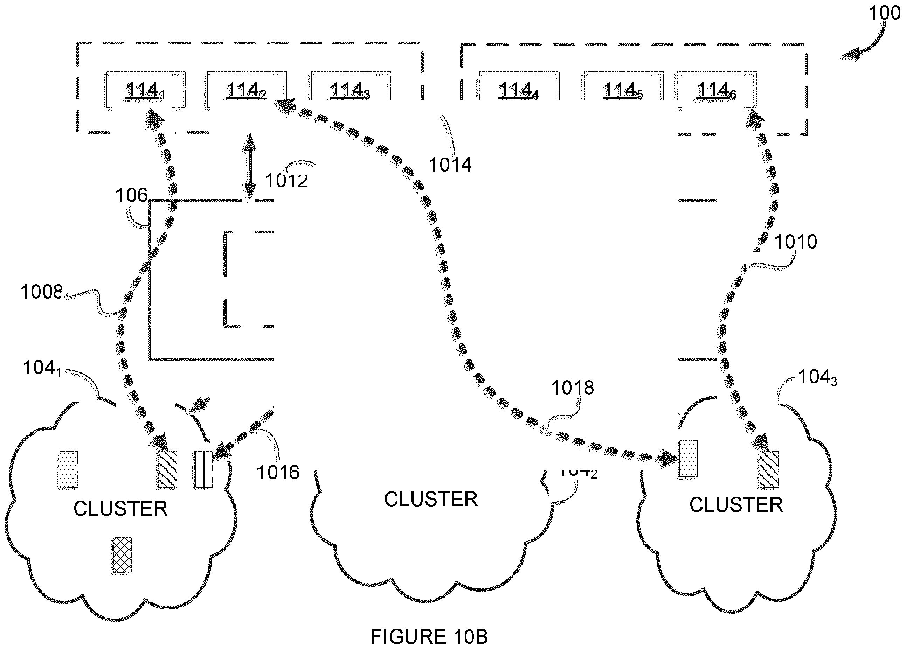

Figure 10B illustrates various data accessing scenarios. The cluster management system 106 may be configured to access a file from a nearest cluster for best performance. For example, when requested by application 114₁, a file is accessed in cluster 104₁ via path 1008. The same file is accessed in cluster 104₃ via path 1010 when requested by application 114₆. In some embodiments, the system 106 is configured to access a file from the cluster with the latest updated data, to ensure strong consistency. For example, when either one of applications 114₃ and 114₄ request a file, it is accessed in cluster 104₂ via paths 1012 and 1014, respectively, even though application 114₃ could have accessed the file locally in cluster 104₁. In some embodiments, the system 106 is configured to access a file from a remote cluster if a local cluster does not have an available copy. For example, application 114₅ requests a file and it is accessed in cluster 104₁ via path 1016. In some embodiments, the system 106 is configured to access a requested file from a cluster with the lightest workload, for load balancing purposes. For example, when application 114₂ requests access to a file, it is provided via path 1018 in cluster 104₃ even though it is also available on cluster 104₁. Other configurations and combinations may also be used.

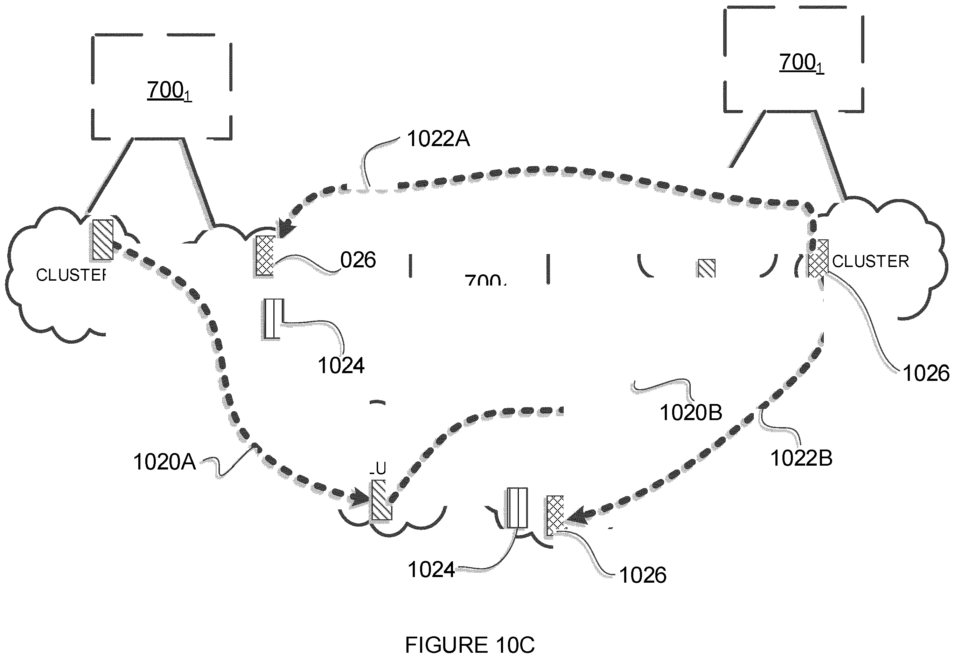

Figure 10C illustrates various data replication scenarios. The system may be configured to replicate selected files or all files. The files may be replicated only to selected clusters or to all clusters. For example, file 1024 is replicated only in two clusters while file 1026 is replicated in three clusters. The files may be replicated using pipeline paths, as illustrated with paths 1020A, 1020B. The files may also be replicated from a centric cluster, for example using paths 1022A, 1022B. In some embodiments, the cluster management system 106 is configured to replicate data using a streaming mode for best availability, by periodic batch for better performance, or a combination thereof. Other configurations and combinations may also be used.

Replication of data between clusters 104, whether it be individual files and/or directories, may occur using various mechanisms. In some embodiments, replication is triggered based on a request received by an application 114. In some embodiments, replication is planned according to a regular schedule. In some embodiments, replication is triggered according to one or more policies. A combination of any of these embodiments can also be implemented.

The cluster management system 106 therefore provides a single management system for all DFS 108 forming part of different clusters. The cluster files and general function of the clusters 104 remain unchanged by the addition the cluster management system 106.

In some embodiments, the clusters 104 are HDFS/HCFS clusters. The client component 200 is an HCFS compatible library to interface with the applications 114. The applications 114 can dynamically load the client component 200 based on an HDFS/HCFS protocol. In other words, the client component 200 may be loaded as needed by the applications 114. In addition, the client component 200 may load different drivers for different clusters 104. For example, a first driver is loaded by the client component 200 for cluster 104₁ and a second driver is loaded by the client component for cluster 104₂. The first driver is for HDFS version 1 while the second driver is for HCFS version x. A third driver may be loaded for cluster 104₃, suitable for HDFS version 2.

The applications 114 can use a Uniform Resource Identifier (URI) to represent a data file to be accessed. An example URI format is "scheme://authority/path". For an HDFS-based application, an HDFS scheme is used. For an HCFS-based application, various scheme types and file system plug-ins may be used, such as "s3" for an Amazon S3-based HCFS system. The client component 200 is configured to provide both HDFS-based URI and/or HCFS-based URI to the applications 114. Examples using the embodiments described above are "Pylon://user/LOGICAL_FILE1" for an HCFS scheme, or "hdfs://temp/LOGICAL_FILE1" for an HDFS scheme.

In some embodiments, the client component is configured to operate under two or more modes, each mode setting a given behavior for the application 114 as a function of the corresponding scheme in use. TABLE 1 illustrates an example with two modes, and two schemes.

**TABLE 1**

| | HDFS SCHEME | HCFS SCHEME |
|---|---|---|
| MODE 1 | Client component not loaded by application. | Client component loaded by application to handle request, client component coordinates with manager component for data access. |
| MODE 2 | Client component loaded by application to handle request, client component coordinates with manager component for data access. | |

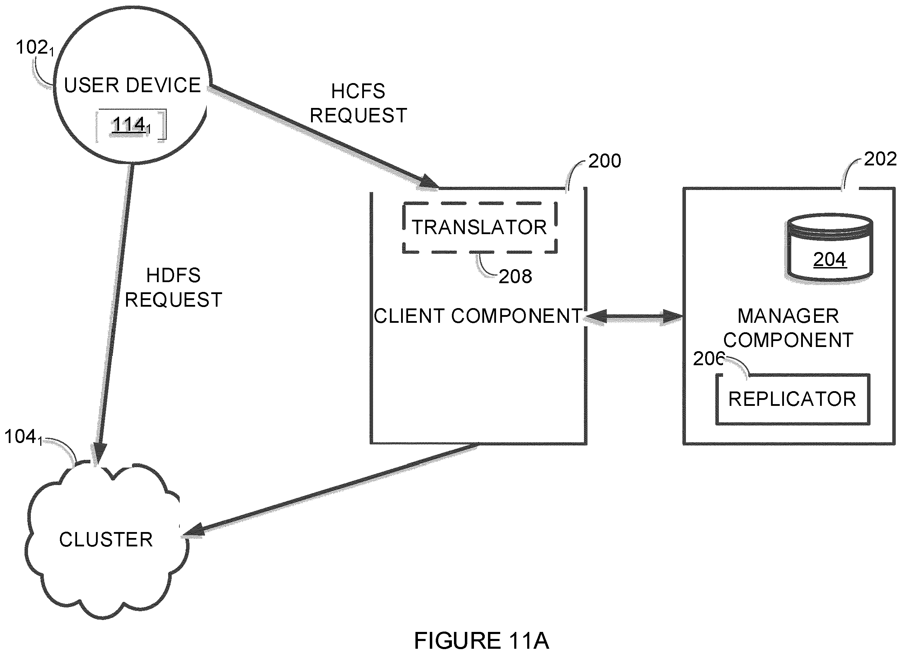

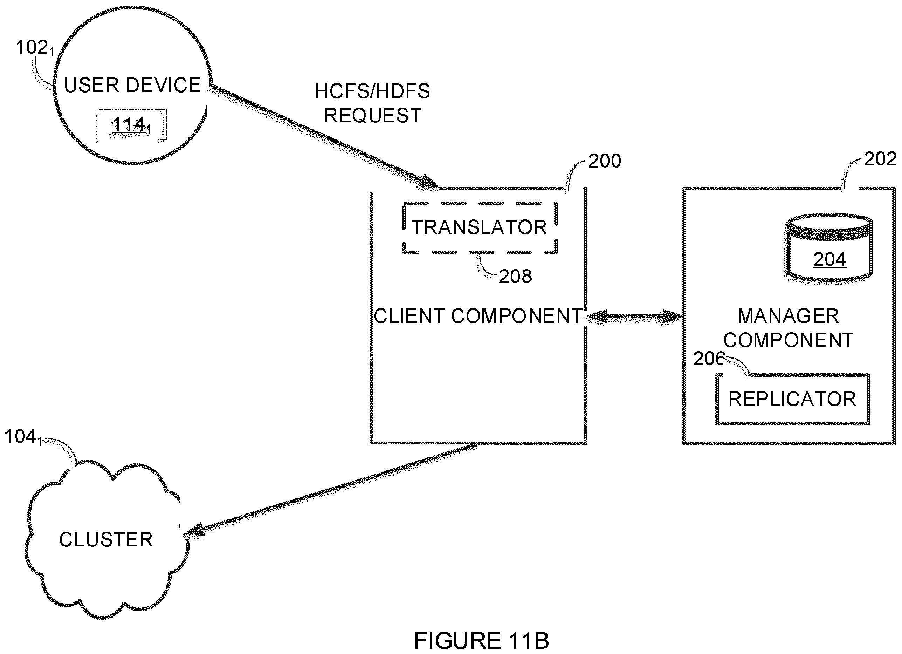

Figure 11A illustrates an example for Mode 1. As shown, a request sent by application 114₁ that is based on an HDFS scheme is sent directly to the cluster 104₁. A request sent by application 114₁ that is based on an HCFS scheme goes to the client component 200 before being redirected to the cluster 104₁. Figure 11B illustrates an example for Mode 2. As shown, both HDFS and HCFS based requests are sent to the client component 200 before being redirected to the cluster 104₁. If the client component 200 is HCFS-based, the translator 208 will translate HDFS-based requests into an HCFS scheme.

The manager component 202 provides a global name space for multiple HDFS/HCFS based clusters 114 using the metadata stored in storage medium 204. The manager component oversees multiple clusters 114 and schedules data flow among the clusters 114 via the replicator 206. The replicator 206 is configured to track changes to files and plan replication tasks across clusters 114.

Metadata is created and stored in the storage medium 204 or elsewhere in order to manage the cluster files 110. In some embodiments, each cluster file 110 has a corresponding cluster management file. The cluster management file contains the mapping of the logical file to the physical file and any other information required for managing the cluster files 110. The mapping of the logical file to the physical file and any other information required for managing the cluster files 110 is the metadata. Operations on the cluster files are coordinated via consensus protocol when a plurality of manager components 400 are present.

In some embodiments, the cluster files 110 are organized according to a directory cataloging structure, and the cluster management files are used to store information (i.e. metadata) about cluster directories and relationships among the directories. Each cluster directory may comprise one or more cluster files 110 and, in some cases, references to subdirectories. Instead of merely replicating cluster files from one cluster to another cluster, directories comprising cluster files and the relationships between the directories can be replicated between clusters.

In some embodiments, directories are used as a logical concept at the metadata management layer and therefore, do not require a one-to-one mapping in the physical cluster layer. In this case, some directory-related operations do not need to access the underlying clusters. For example, an application 114 sends a request to create a directory. The request is received by the client component 200 of the cluster management system 106. The client component 200 transfers the request to the manager component 202, which creates metadata regarding the request. The metadata may be stored in a new cluster management file or in an existing cluster management file. In some embodiments, when a new directory is created, a new cluster management file is created for the directory. Metadata stored in the new cluster management file includes a directory name, such as "DIRECTORY1" and metadata mapping the new cluster management file to "DIRECTORY1" is created and stored, for example in "RECORD2". The metadata may also include any file that forms part of the directory. The directory name is returned to the application 114 by the client component 200. There is no need to access the clusters for this operation as the creation of the directory does not affect the structure of the cluster files in any manner.

The applications 114 may interact with the cluster management system 106 using the directory names, for example by requesting to list the contents of "DIRECTORY1". The request is received by the client component 200 and transferred to the manager component 202. The manager component 202 accesses the cluster management files and retrieves the metadata regarding "DIRECTORY1". This information is returned to the application 114 by the client component 200. Again, there is no need to access the clusters for this operation as the listing of directory files does not affect the structure of the cluster files in any manner.

Similarly, renaming a directory only involves metadata management and does not require access to the underlying physical cluster files. When a request to rename a directory is received from an application 114, the cluster management system 106 updates the cluster management file for the directory as well as all of the cluster management files of each file in the directory. This may be a time consuming operation if there are a large number of files in the directory, but renaming can take place concurrently with other ongoing write operations.

Other requests, such as deleting a directory, will involve access to the cluster files as the underlying structure of the cluster files is modified. The first part of the directory deleting operation is the same as a directory creating operation. The request to delete a directory is received by the client component 200 and sent to the manager component 202. All cluster management files are updated accordingly, by deleting the entry of the directory itself (name, contents, status) as well as entries of files under the directory (name, status). Confirmation of the deletion is sent to the application 114 by the client component 200. In addition, the cluster management system 106 also sends notifications to the clusters 104 to delete the directories.

Each computer program described herein may be implemented in a high level procedural or object oriented programming or scripting language, or a combination thereof, to communicate with a computer system. Alternatively, the programs may be implemented in assembly or machine language. The language may be a compiled or interpreted language. Each such computer program may be stored on a storage media or a device, for example a ROM, a magnetic disk, an optical disc, a flash drive, or any other suitable storage media or device.

Embodiments of the cluster management system 106 may also be considered to be implemented by way of a non-transitory computer-readable storage medium having a computer program stored thereon.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

Various aspects of the present computing environment 100 may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention as defined by the appended claims.

## Claims

1. A system for managing a plurality of clusters of distributed file systems, the plurality of clusters having cluster files, the system comprising:
at least one processing unit; and
a non-transitory memory communicatively coupled to the at least one processing unit and comprising computer-readable program instructions executable by the at least one processing unit for:
receiving a request to access a cluster file in at least one of the clusters, the request comprising a logical file name, the request received from an application on a user device;
retrieving metadata using the logical file name, the metadata mapping a logical file to a physical file, the physical file being the cluster file;
determining a physical file location of the physical file and a physical file name of the physical file from the metadata; and
sending the request to access the cluster file, using the physical file name of the physical file, to one of the clusters corresponding to the physical file location of the physical file.

2. The system of claim 1, wherein the distributed file systems are Hadoop Distributed File Systems or Hadoop Compatible File Systems.

3. The system of claim 1 or 2, wherein the program instructions are executable for implementing at least one client component for communicating with the application and the clusters, and at least one manager component for generating and storing the metadata.

4. The system of claim 3, wherein the at least one client component comprises a plurality of client components each configured to interface with a different user application.

5. The system of claim 3, wherein the at least one manager component comprises a plurality of manager components each configured to interface with a different grouping of the plurality of clusters.

6. The system of any one of claims 1 to 5, wherein the program instructions are executable for implementing the system as a virtual machine.

7. The system of any one of claims 1 to 6, wherein the program instructions are executable for:
receiving a request to access a cluster file in at least one of the clusters, the request comprising a logical file name, the request received from an application on a user device;
retrieving metadata using the logical file name, the metadata mapping a logical file to a physical file, the physical file being the cluster file;
determining a physical file location of the physical file and a physical file name of the physical file from the metadata; and
sending the request to access the cluster file, using the physical file name of the physical file, to one of the clusters corresponding to the physical file location of the physical file.

8. A method for managing a plurality of clusters of distributed filed systems, the plurality of clusters having cluster files, the method comprising:
receive a request to access a cluster file in at least one of the clusters, the request comprising a logical file name, the request received from an application on a user device;
retrieve metadata using the logical file name, the metadata mapping a logical file to a physical file, the physical file being the cluster file;
determine a physical file location of the physical file and a physical file name of the physical file from the metadata; and
send the request to access the cluster file, using the physical file name of the physical file, to one of the clusters corresponding to the physical file location of the physical file.

9. The method according to claim 8, the method further comprising translating the request to access a new cluster file from a first format to a second format, wherein the application supports the first format and the clusters support the second format.

10. The method according to claims 8 or 9, wherein sending the request to access the new cluster file comprises sending the request to the at least one of the clusters corresponding to the location of the physical file from the metadata.

11. The method according to claims 8 or 9, wherein sending the request to access the new cluster file comprises selecting the at least one of the clusters by considering at least one of system performance, system consistency, local data availability, and load balancing across the clusters.

12. The method according to claim 10, wherein the method further comprising:
receiving a request to modify the new cluster file, the request comprising the logical file name;
retrieving the metadata corresponding to the new cluster file using the logical file name;
generating new metadata in accordance with the request to modify the new cluster file;
determining a location of the physical file from the metadata;
sending the request to modify the new cluster file, using the physical file name, to at least one of the clusters; and
storing the new metadata in association with the new cluster file.

13. The method according to any one of claims 8 to 12, wherein sending the request to modify the new cluster file comprises sending the request to the at least one of the clusters corresponding to the location of the physical file from the metadata.

14. A computer readable medium having stored thereon program instructions executable by a processor for managing a plurality of clusters of distributed file systems, the plurality of clusters having cluster files, the program instructions configured for:
receiving a request to access a cluster file in at least one of the clusters, the request comprising a logical file name, the request received from an application on a user device;
retrieving metadata using the logical file name, the metadata mapping a logical file to a physical file, the physical file being the cluster file;
determining a physical file location of the physical file and a physical file name of the physical file from the metadata; and
sending the request to access the cluster file, using the physical file name of the physical file, to one of the clusters corresponding to the physical file location of the physical file.

## Patentansprüche

1. System zum Verwalten einer Vielzahl von Clustern verteilter Dateisysteme, wobei die Vielzahl von Clustern Clusterdateien aufweist, wobei das System Folgendes umfasst:
mindestens eine Verarbeitungseinheit; und
einen nichtflüchtigen Speicher, der kommunikativ mit der mindestens einen Verarbeitungseinheit gekoppelt ist und computerlesbare Programmanweisungen umfasst, die von der mindestens einen Verarbeitungseinheit ausführbar sind zum:
Empfangen einer Anforderung zum Zugreifen auf eine Clusterdatei in mindestens einem der Cluster, wobei die Anforderung einen logischen Dateinamen umfasst, wobei die Anforderung von einer Anwendung auf einer Benutzervorrichtung empfangen wird;
Abrufen von Metadaten unter Verwendung des logischen Dateinamens, wobei die Metadaten eine logische Datei auf eine physische Datei abbilden, wobei die physische Datei die Clusterdatei ist;
Bestimmen einer physischen Dateiposition der physischen Datei und eines physischen Dateinamens der physischen Datei aus den Metadaten; und
Senden der Anforderung zum Zugreifen auf die Clusterdatei unter Verwendung des physischen Dateinamens der physischen Datei an einen der Cluster, der der physischen Dateiposition der physischen Datei entspricht.

2. System nach Anspruch 1, wobei die verteilten Dateisysteme verteilte Hadoop-Dateisysteme oder kompatible Hadoop-Dateisysteme sind.

3. System nach Anspruch 1 oder 2, wobei die Programmanweisungen ausführbar sind zum Implementieren mindestens einer Clientkomponente zum Kommunizieren mit der Anwendung und den Clustern und mindestens einer Verwaltungskomponente zum Erzeugen und Speichern der Metadaten.

4. System nach Anspruch 3, wobei die mindestens eine Clientkomponente eine Vielzahl von Clientkomponenten umfasst, von denen jede konfiguriert ist, um eine Schnittstelle mit einer anderen Benutzeranwendung zu bilden.

5. System nach Anspruch 3, wobei die mindestens eine Verwaltungskomponente eine Vielzahl von Verwaltungskomponenten umfasst, von denen jede konfiguriert ist, um eine Schnittstelle mit einer anderen Gruppierung der Vielzahl von Clustern zu bilden.

6. System nach einem der Ansprüche 1 bis 5, wobei die Programmanweisungen zum Implementieren des Systems als virtuelle Maschine ausführbar sind.

7. System nach einem der Ansprüche 1 bis 6, wobei die Programmanweisungen ausführbar sind zum:
Empfangen einer Anforderung zum Zugreifen auf eine Clusterdatei in mindestens einem der Cluster, wobei die Anforderung einen logischen Dateinamen umfasst, wobei die Anforderung von einer Anwendung auf einer Benutzervorrichtung empfangen wird;
Abrufen von Metadaten unter Verwendung des logischen Dateinamens, wobei die Metadaten eine logische Datei auf eine physische Datei abbilden, wobei die physische Datei die Clusterdatei ist;
Bestimmen einer physischen Dateiposition der physischen Datei und eines physischen Dateinamens der physischen Datei aus den Metadaten; und
Senden der Anforderung zum Zugreifen auf die Clusterdatei unter Verwendung des physischen Dateinamens der physischen Datei an einen der Cluster, der der physischen Dateiposition der physischen Datei entspricht.

8. Verfahren zum Verwalten einer Vielzahl von Clustern verteilter Dateisysteme, wobei die Vielzahl von Clustern Clusterdateien aufweist, wobei das Verfahren Folgendes umfasst:
Empfangen einer Anforderung zum Zugreifen auf eine Clusterdatei in mindestens einem der Cluster, wobei die Anforderung einen logischen Dateinamen umfasst, wobei die Anforderung von einer Anwendung auf einer Benutzervorrichtung empfangen wird;
Abrufen von Metadaten unter Verwendung des logischen Dateinamens, wobei die Metadaten eine logische Datei auf eine physische Datei abbilden, wobei die physische Datei die Clusterdatei ist;
Bestimmen einer physischen Dateiposition der physischen Datei und eines physischen Dateinamens der physischen Datei aus den Metadaten; und
Senden der Anforderung zum Zugreifen auf die Clusterdatei unter Verwendung des physischen Dateinamens der physischen Datei an einen der Cluster, der der physischen Dateiposition der physischen Datei entspricht.

9. Verfahren nach Anspruch 8, wobei das Verfahren ferner das Übersetzen der Anforderung zum Zugreifen auf eine neue Clusterdatei von einem ersten Format in ein zweites Format umfasst, wobei die Anwendung das erste Format unterstützt und die Cluster das zweite Format unterstützen.

10. Verfahren nach Anspruch 8 oder 9, wobei das Senden der Anforderung zum Zugreifen auf die neue Clusterdatei das Senden der Anforderung an den mindestens einen der Cluster umfasst, der der Position der physischen Datei aus den Metadaten entspricht.

11. Verfahren nach Anspruch 8 oder 9, wobei das Senden der Anforderung zum Zugreifen auf die neue Clusterdatei das Auswählen des mindestens einen der Cluster umfasst, indem mindestens eines von Systemleistung, Systemkonsistenz, lokale Datenverfügbarkeit und Lastausgleich über die Cluster hinweg berücksichtigt wird.

12. Verfahren nach Anspruch 10, wobei das Verfahren ferner Folgendes umfasst:
Empfangen einer Anforderung zum Modifizieren der neuen Clusterdatei, wobei die Anforderung den logischen Dateinamen umfasst;
Abrufen der Metadaten entsprechend der neuen Clusterdatei unter Verwendung des logischen Dateinamens;
Erzeugen neuer Metadaten gemäß der Anforderung, die neue Clusterdatei zu modifizieren;
Bestimmen einer Position der physischen Datei aus den Metadaten;
Senden der Anforderung zum Modifizieren der neuen Clusterdatei unter Verwendung des physischen Dateinamens an mindestens einen der Cluster; und
Speichern der neuen Metadaten in Verbindung mit der neuen Clusterdatei.

13. Verfahren nach einem der Ansprüche 8 bis 12, wobei das Senden der Anforderung zum Modifizieren der neuen Clusterdatei das Senden der Anforderung an den mindestens einen der Cluster umfasst, der der Position der physischen Datei aus den Metadaten entspricht.

14. Computerlesbares Medium mit darauf gespeicherten Programmanweisungen, die von einem Prozessor zum Verwalten einer Vielzahl von Clustern verteilter Dateisysteme ausführbar sind, wobei die Vielzahl von Clustern Clusterdateien aufweist, wobei die Programmanweisungen konfiguriert sind zum:
Empfangen einer Anforderung zum Zugreifen auf eine Clusterdatei in mindestens einem der Cluster, wobei die Anforderung einen logischen Dateinamen umfasst, wobei die Anforderung von einer Anwendung auf einer Benutzervorrichtung empfangen wird;
Abrufen von Metadaten unter Verwendung des logischen Dateinamens, wobei die Metadaten eine logische Datei auf eine physische Datei abbilden, wobei die physische Datei die Clusterdatei ist;
Bestimmen einer physischen Dateiposition der physischen Datei und eines physischen Dateinamens der physischen Datei aus den Metadaten; und
Senden der Anforderung zum Zugreifen auf die Clusterdatei unter Verwendung des physischen Dateinamens der physischen Datei an einen der Cluster, der der physischen Dateiposition der physischen Datei entspricht.

## Revendications

1. Système pour gérer une pluralité de grappes de systèmes de fichiers distribués, la pluralité de grappes ayant des fichiers de grappe, le système comprenant :
au moins une unité de traitement ; et
une mémoire non transitoire couplée en communication à l'au moins une unité de traitement et comprenant des instructions de programme lisibles par ordinateur exécutables par l'au moins une unité de traitement pour :
recevoir une demande d'accès à un fichier de grappe dans au moins l'une des grappes, la demande comprenant un nom de fichier logique, la demande étant reçue d'une application sur un dispositif utilisateur ;
récupérer des métadonnées à l'aide du nom de fichier logique, les métadonnées mappant un fichier logique à un fichier physique, le fichier physique étant le fichier de grappe ;
déterminer un emplacement de fichier physique du fichier physique et un nom de fichier physique du fichier physique à partir des métadonnées ; et
envoyer la demande d'accès au fichier de grappe, à l'aide du nom de fichier physique du fichier physique, à l'une des grappes correspondant à l'emplacement de fichier physique du fichier physique.

2. Système selon la revendication 1, dans lequel les systèmes de fichiers distribués sont des systèmes de fichiers distribués Hadoop ou des systèmes de fichiers compatibles Hadoop.

3. Système selon la revendication 1 ou 2, dans lequel les instructions de programme sont exécutables pour mettre en œuvre au moins un composant client pour communiquer avec l'application et les grappes, et au moins un composant gestionnaire pour générer et stocker les métadonnées.

4. Système selon la revendication 3, dans lequel l'au moins un composant client comprend une pluralité de composants clients configurés chacun pour s'interfacer avec une application utilisateur différente.

5. Système selon la revendication 3, dans lequel l'au moins un composant gestionnaire comprend une pluralité de composants gestionnaires, chacun étant configuré pour s'interfacer avec un groupe différent de la pluralité de grappes.

6. Système selon l'une quelconque des revendications 1 à 5, dans lequel les instructions de programme sont exécutables pour mettre en œuvre le système en tant que machine virtuelle.

7. Système selon l'une quelconque des revendications 1 à 6, dans lequel les instructions de programme sont exécutables pour :
recevoir une demande d'accès à un fichier de grappe dans au moins l'une des grappes, la demande comprenant un nom de fichier logique, la demande étant reçue d'une application sur un dispositif utilisateur ;
récupérer des métadonnées à l'aide du nom de fichier logique, les métadonnées mappant un fichier logique à un fichier physique, le fichier physique étant le fichier de grappe ;
déterminer un emplacement de fichier physique du fichier physique et un nom de fichier physique du fichier physique à partir des métadonnées ; et
envoyer la demande d'accès au fichier de grappe, à l'aide du nom de fichier physique du fichier physique, à l'une des grappes correspondant à l'emplacement de fichier physique du fichier physique.

8. Procédé pour gérer une pluralité de grappes de systèmes de fichiers distribués, la pluralité de grappes ayant des fichiers de grappe, le procédé comprenant :
la réception d'une demande d'accès à un fichier de grappe dans au moins l'une des grappes, la demande comprenant un nom de fichier logique, la demande étant reçue d'une application sur un dispositif utilisateur ;
la récupération des métadonnées à l'aide du nom de fichier logique, les métadonnées mappant un fichier logique à un fichier physique, le fichier physique étant le fichier de grappe ;
la détermination d'un emplacement de fichier physique du fichier physique et d'un nom de fichier physique du fichier physique à partir des métadonnées ; et
l'envoi de la demande d'accès au fichier de grappe, à l'aide du nom de fichier physique du fichier physique, à l'une des grappes correspondant à l'emplacement de fichier physique du fichier physique.

9. Procédé selon la revendication 8, le procédé comprenant en outre la translation de la demande d'accès à un nouveau fichier de grappe d'un premier format à un second format, dans lequel l'application prend en charge le premier format et les grappes prennent en charge le second format.

10. Procédé selon les revendications 8 ou 9, dans lequel l'envoi de la demande d'accès au nouveau fichier de grappe comprend l'envoi de la demande à l'au moins une des grappes correspondant à l'emplacement du fichier physique à partir des métadonnées.

11. Procédé selon les revendications 8 ou 9, dans lequel l'envoi de la demande d'accès au nouveau fichier de grappe comprend la sélection de l'au moins une des grappes en prenant en considération au moins l'un parmi les performances du système, la cohérence du système, la disponibilité des données locales et l'équilibrage de charge entre les grappes.

12. Procédé selon la revendication 10, dans lequel le procédé comprend en outre :
la réception d'une demande de modification du nouveau fichier de grappe, la demande comprenant le nom de fichier logique ;
la récupération des métadonnées correspondant au nouveau fichier de grappe à l'aide du nom de fichier logique ;
la génération de nouvelles métadonnées conformément à la demande de modification du nouveau fichier de grappe ;
la détermination d'un emplacement du fichier physique à partir des métadonnées ;
l'envoi de la demande de modification du nouveau fichier de grappe, à l'aide du nom de fichier physique, à au moins l'une des grappes ; et
le stockage des nouvelles métadonnées en association avec le nouveau fichier de grappe.

13. Procédé selon l'une quelconque des revendications 8 à 12, dans lequel l'envoi de la demande de modification du nouveau fichier de grappe comprend l'envoi de la demande à l'au moins une des grappes correspondant à l'emplacement du fichier physique à partir des métadonnées.

14. Support lisible par ordinateur sur lequel sont stockées des instructions de programme exécutables par un processeur pour gérer une pluralité de grappes de systèmes de fichiers distribués, la pluralité de grappes ayant des fichiers de grappe, les instructions de programme étant configurées pour :
recevoir une demande d'accès à un fichier de grappe dans au moins l'une des grappes, la demande comprenant un nom de fichier logique, la demande étant reçue d'une application sur un dispositif utilisateur ;
récupérer des métadonnées à l'aide du nom de fichier logique, les métadonnées mappant un fichier logique à un fichier physique, le fichier physique étant le fichier de grappe ;
déterminer un emplacement de fichier physique du fichier physique et un nom de fichier physique du fichier physique à partir des métadonnées ; et
envoyer la demande d'accès au fichier de grappe, à l'aide du nom de fichier physique du fichier physique, à l'une des grappes correspondant à l'emplacement de fichier physique du fichier physique.
